# EUROPEAN PATENT SPECIFICATION

(11) **EP 2 583 814 B1**
(45) Date of publication and mention of the grant of the patent: **23.11.2022**
(21) Application number: 11795227.5
(22) Date of filing: 29.03.2011
(51) Int. Cl.: B29C 70/34, B29C 70/44, B29C 37/00, B29D 99/00

(54) **METHOD FOR MANUFACTURING T-SHAPED AIRCRAFT BEAMS AND A CURING TOOL USED DURING SAME**
VERFAHREN ZUR HERSTELLUNG T-FÖRMIGER FLUGZEUGBALKEN UND IN DIESEM VERFAHREN VERWENDETES HÄRTUNGSWERKZEUG
PROCÉDÉ DE FABRICATION DE LISSES EN FORME DE "T" POUR UN AVION ET OUTIL DE TRAITEMENT UTILISÉ DANS LE CADRE DUDIT PROCÉDÉ

(30) Priority: 18.06.2010 ES 201030940
(43) Date of publication of application: 24.04.2013
(73) Proprietor: Airbus Operations, S.L., 28906 Getafe Madrid (ES)
(72) Inventor: PÉREZ PASTOR, Augusto, E-28250 Torrelodones (Madrid) (ES); SÁNCHEZ FERNÁNDEZ, Julián, E-28914 Leganés (Madrid) (ES); ESQUIVIAS GARCÍA, Fernando, E-45221 Esquivias (Toledo) (ES)
(74) Representative: ABG Intellectual Property Law, S.L.
(86) International application number: PCT/ES2011/070219
(87) International publication number: WO 2011/157871

(56) References cited:
- WO-A2-2008/152582
- WO-A2-2008/152582
- ES-A1- 2 185 443
- ES-A1- 2 205 961
- ES-T3- 2 271 513
- US-A- 5 242 523

## Description

### OBJECT OF THE INVENTION

An object of the present invention is to provide a method for manufacturing T-shaped stringer for the construction of aircraft structures reducing time, work, and the difficulties of assembly, particularly when another part is assembled onto the stringers.

The main objective of the present invention is to minimize the effect known as the "Mexican hat effect" that occurs with T-shaped stringers. This means minimizing the fact that the thickness of the stringer at the end of the stringer web is smaller than the nominal thickness and at the end of the stringer flange is greater than said nominal thickness.

Therefore, another objective of the invention is to avoid using solid supplements what another part needs to be assembled on the stringer flange.

An additional objective of the present invention is to describe the use of a curing tool to overcome the previously mentioned effect.

Lastly, another objective of the present invention relates to facilitating the demolding step of the stringers from the vacuum bag.

### FIELD OF THE INVENTION

The present invention falls within the aeronautical industry and relates to aircraft stringers. More specifically, it relates to T-shaped composite material stringers and the manufacturing methods thereof.

### BACKGROUND OF THE INVENTION

In aircraft manufacturing, a stringer or fuselage stringer or reinforcement is a fine strip made from carbon fiber. Various strips are co-bonded on a cured lining to construct a part of the aircraft (for example, the wings, the HTP, etc.).

A very common type of stringer is the stringer which has a T-shaped cross-section that defines a web and a flange.

Normally, a method of manufacturing a T-shaped stringer for an aircraft comprises a first step of hot forming the laminate to obtain semi-stringers with a geometry with a L-shaped cross-section, and a second step of joining two L-shaped hot formed semi-stringers in order to form a T-shaped stringer. Later the T-shaped stringer is co-bonded on a cured lining with an adhesive line between said stringer and said lining.

In the aeronautical industry, that said method includes a third step, which is the curing cycle, wherein the curing tools, preferably invar alloy brackets of approximately 90°, are placed following the contour of the T-shaped stringer hot formed, inside a vacuum bag during the curing cycle, is also known. It should be noted that the invar brackets have a 90° opening when the lining on which the stringers are co-bonded is a flat lining. But when the lining is curved, then the angle between the flange and the web of the stringer varies slightly, thus causing the opening angle of the invar to be different to 90°.

These T-shaped stringers, which are formed using traditional manufacturing methods whereby the stringers that are not cured are joined together on cured surface layers with the stringer curing tool inside the vacuum bag, are subjected to the inconvenient "Mexican hat effect", which is the fact that the thickness of the stringer:
- is smaller than the nominal thickness at the end of the stringer web, and
- is greater than the nominal thickness at the ends of the stringer flange.

Therefore, if any other part needs to be assembled on the stringer flange and the difference in thickness between the thinnest points and thickest points of the stringer flange is too great, a sol id supplement must be added to level out the surface on which the other part needs to be assembled. The use of these solid supplements increases the difficulties of assembly and the amount of work implied.

Document WO 2008/152582 A2 discloses a curing apparatus used for the manufacturing of a beam, the apparatus further comprising a bar which may be made of, for example, invar.

Therefore, it was desirable to find a method for manufacturing stringers that minimizes the drawback of the "Mexican hat effect" previously mentioned.

### DESCRIPTION OF THE INVENTION

The present invention is designed to overcome the previously mentioned inconveniences of the T-shaped stringers.

Throughout the whole of the present invention, the term "invar", also known generically as FeNi36 (64FeNi in the United States), is a nickel (36%) and steel (64%) alloy, outstanding for its unique low coefficient of thermal expansion (CTE). The name "invar" comes from the word "invariable" referring to its lack of expansion or contraction with temperature changes.

Therefore, an invar alloy has an extremely low expansion at approximately room temperature, making it particularly useful in applications wherein a minimal thermal expansion is required and high dimensional stability, as it happens with precision instruments such as optoelectronic devices, optical and laser tables, electronic components and other types of scientific instruments. It is also widely used in the manufacturing of tools for curing composite materials. The expression "composite materials" includes diverse materials based on polymer and non-polymeric, non-homogenous, materials usually called "reinforced composite materials", "carbon fiber composite materials" and other additional terms known in the art.

Therefore, the present invention describes a method for manufacturing T-shaped aircraft stringers that have a web and a flange and wherein the method includes:
- a first step of hot forming a carbon fiber laminate in order to achieve semi-stringers with a geometry with a L-shaped cross-section,
- a second step of joining the two L-shaped hot formed semi-stringers in order to form a T -shaped stringer,
- a third step in which the resulting T-shaped stringer is co-bonded on a cured-lining with an adhesive line between said stringer and said lining, and
- a fourth step of curing the made up T-shaped stringer inside a vacuum bag using invar alloy brackets as curing tools.

The method is characterized in that, previous to the fourth step, the invar alloy brackets are cut in an area of a radius, eliminating a portion thereof that covers the stringer flange in order to define an invar alloy part without a flange.

Preferably, the invar alloy brackets are cut in an area of the radius, in the areas on which other parts will be assembled. In said embodiments, the area in which another part will be assembled is the stringer flange, in this way, the part to be assembled remains in direct contact with the stringer flange.

In a second embodiment of the present invention, there is an elastomeric support on the stringer flange once the invar alloy brackets have been cut. The elastomeric support covers the stringer flange.

Furthermore, in order to facilitate the demolding of the stringers, in a third embodiment of the present invention, a pre-cured and bonded glass fiber is placed on the area that the invar alloy bracket eliminated leaves free, said procured glass fiber being in direct contact with the separating film of the vacuum bag during the curing cycle.

The pre-cured glass fiber can be placed:
- before the hot drape forming of the stringers, or
- once the stringers have been formed, but before placing the invar alloy brackets.

Additionally, when more than one T-shaped stringer is co-bonded at the same time on a cured lining, the present invention uses a filler, located between the flanges of the adjacent stringers, to prevent the edge effect. The edge effect is produced due to the material, before being cured and during the curing cycle, is very soft, in such a way that the vacuum bag tends to round the corners that are not protected by the invar part.

The filler is selected among a group which may include carbon fiber, metal, glass fiber or any other resin that cures at room temperature. If the filler is of any resin that cures at room temperature, the resin can be previously cured and later placed between the two adjacent stringers.

With the new geometry of the invar alloy brackets proposed by the present invention, the use of solid supplements when assembling another part on the stringer flange is avoided.

Moreover, the "Mexican hat effect" previously explained is minimized to tenths of a millimeter.

Another advantage of the present invention is the weight of the invar alloy brackets, since, with the proposed solution, the weight of the invar alloy brackets is less than the weight of the traditional invar alloy brackets with their conventional geometry.

### BRIEF DESCRIPTION OF THE DRAWINGS

The present invention can be fully understood based on the following detailed description of the embodiments of the present invention and on the attached drawings, that are presented only as an example, and therefore are non-limitative of the invention, wherein:

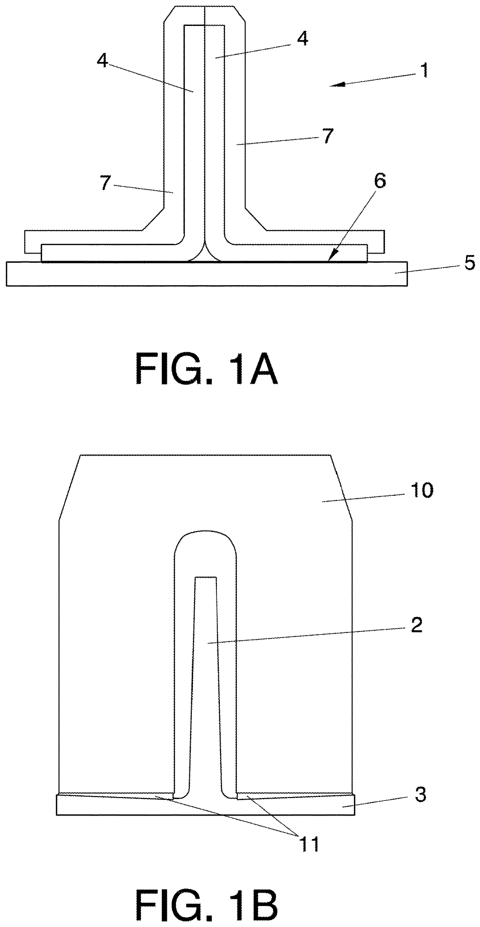

Figure 1 a represents the cross-section of a traditional T-shaped stringer.
Figure 1 b represents the cross-section of the current problem of the T-shaped stringers when another part has to be assembled on the stringer flange.
Figure 2 shows the cross-section of an embodiment of the solution proposed by the present invention.
Figure 3 shows the cross-section of a second embodiment of the solution proposed by the present invention.
Figure 4 shows the cross-section of two adjacent stringers between which a filler is placed.

### References:

1: T-shaped stringer
2: stringer web
3: stringer flange
4: L-shaped semi-stringer
5: cured lining
6: adhesive line
7: traditional invar alloy bracket (approx. 90°)
7', 7": invar alloy parts
8: radial of the invar alloy brackets
9: filler
10: part to be assembled on the stringer flange
11: solid supplement
12: elastomeric support

### DESCRIPTION OF THE PREFERRED EMBODIMENT OF THE INVENTION

The following description is provided solely for the benefit of the reader, and is not intended to limit the invention as set forth by the claims in any way.

Therefore, Figure 1 a shows a traditional T-shaped stringer (1), starting from two hot formed L-shaped semi-stringers (4) co-bonded on a cured lining (5) with an adhesive line (6) between said stringer (1) and said lining (5).

Furthermore, in Figure 1a the invar alloy brackets (7) are placed following the contour of the hot formed T-shaped stringer.

Figure 1 b shows a schematic view of the previously explained problem, known as the "Mexican hat effect", that occurs with T-shaped stringers (1) which is brought about directly by the traditional manufacturing method thereof. Thus, Figure 1 bshows how a space is defined between the stringer flange (3) and the part to be assembled (10) thereon. This space is traditionally adjusted with a solid supplement (11). But, as previously explained, the adjustment using these solid supplements (11) increases the difficulties of the assembly and the amount of work implied.

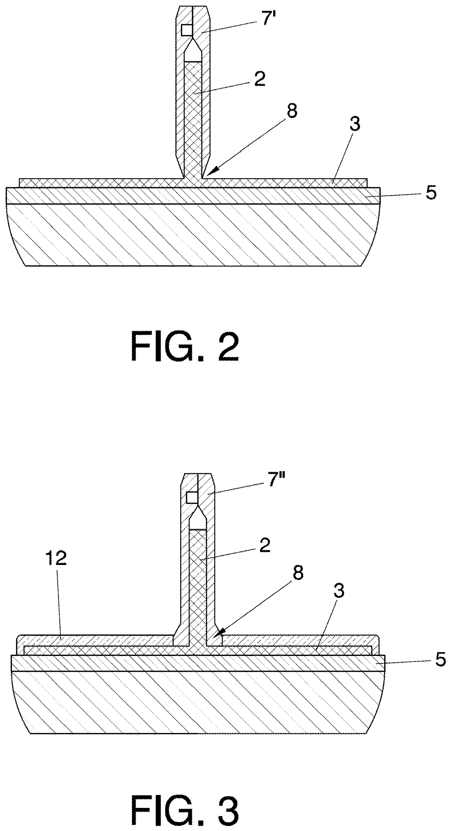

Thus, the present invention describes a method of manufacturing "T-shaped stringers (1) for aircraft which have a stringer web (2) and a stringer flange (3), including the following method:
- a first step of hot forming a carbon fiber laminate in order to achieve a geometry of semi-stringers (4) with an L-shaped cross-section,
- a second step of joining the two L-shaped hot formed semi-stringers (4) in order to forma T-shaped stringer (1 ),
- a third step in which the resulting T-shaped stringer is co-bonded on a cured lining (5) with an adhesive line (6) between said T-shaped stringer (1) and said lining (5) to obtain the final structure, and
- a fourth step of curing the T-shaped stringer (1) obtained inside a vacuum bag using invar alloy brackets (7) as curing tools, with the distinctive characteristic that before carrying out this fourth step, the invar alloy brackets (7) are cut in a (8) eliminating a portion thereof that covers the stringer flange (3) in order to define an invar alloy part (7', 7") without flange, as shown in Figure 2.

Thus, the embodiment shown in Figure 2 represents the invar alloy brackets (7) that are cut in an area of a radius, in the area where another part can be assembled over the stringer flange (3), once the stringer has been cured. The cut is made in a radial direction ending at the join vertex between the web (2) and the flange (3) of the stringer (1).

Figure 3 shows a second embodiment of the present invention where a straight cut is made, maintaining the whole join vertex covered by the resulting invar part (7"). In this second embodiment, there is an elastomeric support (12) over the stringer flange (3) together with the invar alloy part (7") that does not have a flange. The elastomeric support (12) covers the flange (3) of the stringer (1).

In a preferred embodiment, the elastomeric support (12) is of rubber material. The rubber supports can be reused and last several cycles.

In a third embodiment of the present invention, the pre-cured glass fiber is co-bonded over the stringer flange (3) in the area left free by the invar alloy bracket (7) part eliminated. This means that the cured glass fiber would be in direct contact with the separating film of the vacuum bag during the curing cycle.

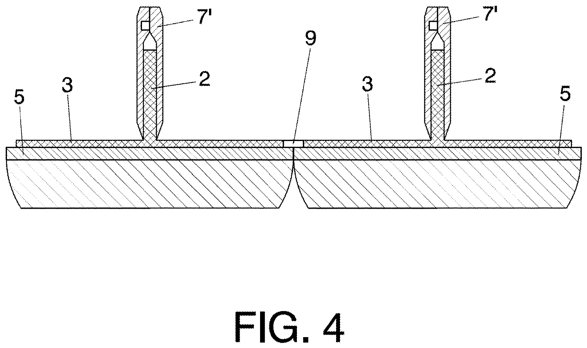

Additionally, as shown in Figure 4, when more than one T-shaped stringer is co-bonded at the same time on a cured lining (5), the present invention describes a filler (9), located between the adjacent stringer flanges (3) in order to avoid the edge effect. The filler (9) is selected among carbon fiber, metal, glass fiber, or any other resin that cures at room temperature.

## Claims

1. A method for manufacturing t-shaped stringers for an aircraft, in which the T-shaped stringers (1) have a web (2) and a flange (3), wherein the method comprises:
- a first step of hot forming a carbon fiber laminate in order to obtain semi-stringers (4) with a L-shaped cross-section,
- a second step wherein two semi-stringers (4) with L-shape thermoformed are placed together to make up a T-shaped stringer (1),
- a third step where the resulting T-shaped stringer (1) is co-bonded on cured lining (5) with an adhesive line (6) between said stringer (1) and said lining (5), and
- a fourth step where the T-shaped stringer obtained (1) is cured inside a vacuum bag, using invar alloy brackets (7) as curing tools,
wherein, before carrying out the fourth step:
- the invar alloy brackets (7) are cut in an area of a radius (8) eliminating a portion thereof that covers the stringer flange (3) in order to define an invar alloy part (7', 7") without a flange, and
- a pre-cured glass fiber is co-bonded over the stringer flange (3) being in direct contact with a separating film of the vacuum bag during the curing cycle.

2. The method according to claim 1, **characterized in that** the cut that defines the invar alloy part (7') is a radial cut in a radial direction ending at a join vertex between the web (2) and the flange (3) of the stringer (1).

3. The method according to claim 1, **characterized in that** the cut that defines the invar alloy part (7") is a straight cut so that the whole join vertex between the web (2) and the flange (3) of the stringer (1) is covered by the invar alloy part (7").

4. The method according to claim 1, **characterized in that** the pre-cured glass fiber is co-bonded over the stringer flange (3) before the hot forming of the stringers (3).

5. The method according to claim 1, **characterized in that** the pre-cured glass fiber is co-bonded over the stringer flange (3) after the forming of the stringers (3) and before the placing of the invar brackets (7', 7").

6. The method according to claim 1, in which more than one T-shaped stringer (1) is co-bonded at the same time, **characterized in that** a filler (9) is placed between the flanges (3) of the adjacent stringers, the filler (9) having the same height that said flanges (3).

7. The method according to claim 6, **characterized in that** the filler (9) is selected among carbon fiber, metal, glass fiber and any resin that cures at room temperature.

## Patentansprüche

1. Verfahren zur Fertigung T-förmiger Stringer für ein Flugzeug, wobei die T-förmigen Stringer (1) einen Steg (2) und einen Flansch (3) aufweisen, wobei das Verfahren umfasst:
- einen ersten Schritt des Heißformens eines Kohlefaserlaminats, um Halbstringer (4) mit einem L-förmigen Querschnitt zu erhalten,
- einen zweiten Schritt, bei dem zwei thermogeformte Halbstringer (4) mit L-Form zusammen platziert werden, um einen T-förmigen Stringer (1) zu bilden,
- einen dritten Schritt, wobei der resultierende T-förmige Stringer (1) an gehärteter Einlage (5) mit einer Kleberspur (6) zwischen dem Stringer (1) und der Einlage (5) co-gebondet wird, und
- einen vierten Schritt, wobei der erhaltene T-förmige Stringer (1) im Inneren eines Vakuumbeutels unter Verwendung von Klammern (7) aus Invar-Legierung als Härtungswerkzeuge gehärtet wird,
wobei vor dem Ausführen des vierten Schritts:
- die Klammern (7) aus Invar-Legierung in einem Bereich eines Radius (8) geschnitten werden, wodurch ein Anteil davon eliminiert wird, der den Stringer-Flansch (3) bedeckt, um ein Invar-Legierungsteil (7', 7") ohne einen Flansch zu definieren, und
- eine vorgehärtete Glasfaser über dem Stringer-Flansch (3) co-gebondet wird, die während des Härtungszyklus in direktem Kontakt mit einem Trennfilm des Vakuumbeutels ist.

2. Verfahren nach Anspruch 1, **dadurch gekennzeichnet, dass** der Schnitt, der das Invar-Legierungsteil (7') definiert, ein Radialschnitt in einer Radialrichtung ist und in einem Verbindungsscheitel zwischen dem Steg (2) und dem Flansch (3) des Stringers (1) endet.

3. Verfahren nach Anspruch 1, **dadurch gekennzeichnet, dass** der Schnitt, der das Invar-Legierungsteil (7") definiert, ein gerader Schnitt ist, so dass der gesamte Verbindungsscheitel zwischen dem Steg (2) und dem Flansch (3) des Stringers (1) durch das Invar-Legierungsteil (7") bedeckt wird.

4. Verfahren nach Anspruch 1, **dadurch gekennzeichnet, dass** die vorgehärtete Glasfaser vor dem Heißformen der Stringer (3) über dem Stringer-Flansch (3) co-gebondet wird.

5. Verfahren nach Anspruch 1, **dadurch gekennzeichnet, dass** die vorgehärtete Glasfaser nach dem Formen der Stringer (3) und vor dem Platzieren der Invar-Klammern (7', 7") über dem Stringer-Flansch (3) co-gebondet wird.

6. Verfahren nach Anspruch 1, wobei mehr als ein T-förmiger Stringer (1) gleichzeitig co-gebondet wird, **dadurch gekennzeichnet, dass** ein Füllstoff (9) zwischen den Flanschen (3) benachbarter Stringer platziert wird, wobei der Füllstoff (9) die gleiche Höhe wie die Flansche (3) hat.

7. Verfahren nach Anspruch 6, **dadurch gekennzeichnet, dass** der Füllstoff (9) ausgewählt ist aus Kohlefaser, Metall, Glasfaser und jedwedem Harz, das bei Raumtemperatur härtet.

## Revendications

1. Procédé de fabrication de lisses en forme de T pour un aéronef, dans lequel les lisses en forme de T (1) comportent une âme (2) et une semelle (3), dans lequel le procédé comprend :
- une première étape de formage à chaud d'un stratifié de fibres de carbone afin d'obtenir des demi-lisses (4) ayant une section transversale en forme de L,
- une deuxième étape dans laquelle deux demi-lisses (4) thermoformées en L sont placées ensemble pour constituer une lisse en forme de T (1),
- une troisième étape au cours de laquelle la lisse en forme de T (1) ainsi obtenue est co-liée sur le revêtement durci (5) avec une ligne adhésive (6) entre ladite lisse (1) et ledit revêtement (5), et
- une quatrième étape où la lisse en forme de T (1) obtenue est durcie à l'intérieur d'une poche à vide, en utilisant des supports en alliage d'invar (7) en tant qu'outils de durcissement,
dans lequel, avant de réaliser la quatrième étape :
- les supports en alliage d'invar (7) sont coupés dans une zone d'un rayon (8) éliminant une partie de ceux-ci qui couvre la semelle (3) de lisse afin de définir une partie en alliage d'invar (7', 7") sans semelle, et
- une fibre de verre prédurcie est co-liée sur la semelle (3) de lisse en étant en contact direct avec un film de séparation de la poche à vide pendant le cycle de durcissement.

2. Procédé selon la revendication 1, **caractérisé en ce que** la coupe qui définit la partie en alliage d'invar (7') est une coupe radiale dans une direction radiale se terminant au niveau d'un sommet de jonction entre l'âme (2) et la semelle (3) de la lisse (1).

3. Procédé selon la revendication 1, **caractérisé en ce que** la coupe qui définit la partie en alliage d'invar (7") est une coupe droite de sorte que la totalité du sommet de jonction entre l'âme (2) et la semelle (3) de la lisse (1) soit couverte par la partie en alliage d'invar (7").

4. Procédé selon la revendication 1, **caractérisé en ce que** la fibre de verre prédurcie est co-liée sur la semelle (3) de lisse avant le formage à chaud des lisses (3).

5. Procédé selon la revendication 1, **caractérisé en ce que** la fibre de verre prédurcie est co-liée sur la semelle (3) de lisse après le formage des lisses (3) et avant le placement des supports en invar (7', 7").

6. Procédé selon la revendication 1, dans lequel plus d'une lisse en forme de T (1) est co-liée en même temps, **caractérisé en ce qu'**une charge (9) est placée entre les semelles (3) des lisses adjacentes, la charge (9) ayant la même hauteur que lesdites semelles (3).

7. Procédé selon la revendication 6, **caractérisé en ce que** la charge (9) est choisie parmi la fibre de carbone, le métal, la fibre de verre et une quelconque résine qui durcit à température ambiante.
